# FASCICULE DE BREVET EUROPEEN

(11) **EP 1 067 300 B1**
(45) Date de publication et mention de la délivrance du brevet: **27.04.2005**
(21) Numéro de dépôt: 00401880.0
(22) Date de dépôt: 30.06.2000
(51) Int. Cl.: F16C 1/16, B60K 15/03

(54) **Réservoir en matériau composite destiné au stockage de gaz liquéfié sous pression**
Vorratsbehälter aus Verbundmaterial zur Speicherung von unter Druck stehendem Flüssiggas
Tank made of composite material for storing pressurized liquified gas

(30) Priorité: 06.07.1999 FR 9908702
(43) Date de publication de la demande: 10.01.2001
(73) Titulaire: Renault s.a.s., 92100 Boulogne Billancourt (FR)
(72) Inventeur: Gardarein, Béatrice, 78530 Buc (FR); Piccirelli, Nicola, 93160 Noisy-le-Grand (FR)

(56) Documents cités:
- EP-A- 0 527 564
- EP-A- 0 580 535
- EP-A- 0 633 422
- EP-A- 0 895 017
- WO-A-97/17570
- FR-A- 2 001 634
- US-A- 5 647 503
- US-A- 5 787 920

## Description

L'invention concerne un réservoir en matériau composite destiné au stockage de carburant liquéfié sous pression.

Les réservoirs automobiles destinés au stockage de carburants gazeux, tels que GPL (gaz de pétrole liquéfié) par exemple, sont actuellement de forme torique ou cylindrique, afin de supporter des pressions élevées. La pression exercée par le GPL est de l'ordre de 2MPa, mais pour des raisons de sécurité, les réservoirs doivent pouvoir supporter des pressions d'au moins 6,75 MPa. Ces réservoirs sont placés soit dans le coffre du véhicule, diminuant ainsi son volume, soit à l'emplacement de la roue de secours. Par ailleurs, le matériau actuellement employé étant l'acier, ces réservoirs présentent une masse relativement élevée. Actuellement, les réservoirs en acier disponibles dans le commerce ont un rapport masse/volume total de l'ordre de 0,5 kg/l.

Des réservoirs métalliques de forme globalement parallélépipédique ont été proposés (EP-A-633 422 et EP-A-527 564). Dans ces réservoirs, la tenue à la pression est assurée par la présence de barreaux ou des cloisons internes reliant les faces opposées du réservoir. Dans ce dernier cas, le renforcement employé rend difficile la mesure de la quantité de carburant restant dans le réservoir. Ces réservoirs apportent donc une solution au problème de leur intégration dans le véhicule, à condition de conserver une forme relativement simple (telle qu'un parallélépipède), mais des formes plus complexes sont difficilement envisageables.

On connaît aussi des réservoirs en matériau composite à matrice polymère supportant la pression. Ils ont le plus souvent une forme cylindrique (EP-A-580 535 et WO-A-97 17570). Ils sont réalisés soit par enroulement filamentaire soit par l'emploi de renforts tressés, suivi d'une imprégnation de résine thermodurcissable par injection. Ces réservoirs permettent un gain de masse vis-à-vis de leurs homologues en acier mais n'apportent pas d'avantages quant à l'implantation du réservoir sur un véhicule, les formes cylindriques étant difficilement insérables dans la structure du véhicule.

Il existe donc un besoin pour un réservoir supportant des pressions élevées, en matériau composite à matrice polymère qui pourrait avoir une forme autre que cylindrique ou torique permettant une intégration plus aisée sur le véhicule, en lieu et place du réservoir d'essence actuel par exemple, tout en permettant un gain de masse par rapport à un réservoir en acier.

Enfin, un tel réservoir en matériau composite devrait pouvoir être produit par un procédé reproductible, afin que ses propriétés mécaniques ne varient pas d'une pièce à l'autre. De plus, le procédé doit être relativement court à mettre en oeuvre si l'on souhaite envisager une industrialisation en grande série du réservoir.

La présente invention vise à satisfaire ce besoin.

Plus particulièrement, l'invention concerne un réservoir en matériau composite tenant la pression, caractérisé en ce qu'il comprend :
A) une enveloppe interne en matériau polymère thermoplastique comportant des paires de faces opposées, les faces opposées d'au moins deux de ces paires étant reliées par une pluralité d'éléments tubulaires dont les extrémités sont d'un seul tenant avec lesdites faces, ladite enveloppe comprenant en outre des bandes de renfort traversant les éléments tubulaires et liées aux faces de l'enveloppe interne adjacentes auxdits éléments tubulaires ; et
B) une enveloppe externe en matériau composite, constituée d'une matrice thermodurcie et d'un renforcement fibreux, recouvrant l'enveloppe interne.

Le réservoir de l'invention a, de préférence, une forme pseudo-parallélépipédique et peut comporter des variations locales de sa géométrie, par exemple comporter des portions en renfoncement pour ménager un passage pour un tuyau ou un pot d'échappement.

L'enveloppe interne du réservoir de l'invention sert de barrière étanche vis-à-vis du carburant gazeux liquéfié, tandis que l'enveloppe externe en matériau composite supporte les sollicitations mécaniques et protège l'enveloppe interne vis-à-vis des agressions extérieures que peut subir le réservoir en service, telles que les chocs, le gravillonnage, les projections de produits chimiques (solutions saline, acides, fluide automobiles), le feu, etc...

L'enveloppe interne du réservoir est élaborée en un matériau thermoplastique tel que, par exemple, un polyéthylène haute densité ou un polyamide. Ces polymères présentent l'avantage d'être facilement mis en oeuvre par rotomoulage ou injection et de posséder une faible densité. Enfin, ils sont relativement inertes vis-à-vis des hydrocarbures aliphatiques.

Les polyamides présentent l'avantage d'une faible perméabilité vis-à-vis des gaz. Par contre, l'emploi d'un polyéthylène peut nécessiter un traitement de surface (fluoration ou sulfonation), pour améliorer la perméabilité de ce matériau vis-à-vis du G.P.L.

Les éléments tubulaires reliant des faces opposées de l'enveloppe interne sont avantageusement répartis sur ces faces de façon sensiblement régulière, par exemple à intervalles de 10 à 13 cm. Il va de soi, toutefois, que la répartition de ces éléments tubulaires pourrait être modifiée suivant la forme et la résistance mécanique demandée au réservoir. Ces éléments tubulaires sont d'un seul tenant avec les faces qu'ils relient et sont produits lors du moulage de l'enveloppe interne, afin de limiter les pièces rapportées. On évite ainsi les problèmes, notamment d'étanchéité qu'engendreraient la fixation de ces éléments tubulaires par collage ou soudage sur les faces de l'enveloppe interne.

L'enveloppe interne peut présenter une épaisseur de 2 à 4 mm environ, de préférence de 2-3 mm. Elle doit être assez solide pour supporter les efforts liés à la réalisation de l'enveloppe externe par-dessus l'enveloppe interne.

Les inserts de fixation des équipements du réservoir sont mis en place au cours de l'élaboration de l'enveloppe interne. Les inserts désirés sont placés dans le moule servant à la production de l'enveloppe interne avant l'introduction de la matière thermoplastique. Le remplissage du moule par la matière thermoplastique réalise, après refroidissement, un surmoulage des inserts qui garantit l'étanchéité de la jonction entre chaque insert et la paroi de l'enveloppe interne.

Les éléments tubulaires sont suffisamment espacés les uns des autres pour ne pas entraver la mise en place d'une jauge de mesure de la quantité de carburant présente dans le réservoir en service.

L'enveloppe interne est renforcée à l'aide d'étroites bandes tissées imprégnées, par exemple, d'un liant thermoplastique que l'on enfile à travers des éléments tubulaires et que l'on fixe sur les parois de ces éléments tubulaires et sur les faces de l'enveloppe interne adjacentes en les chauffant suffisamment pour provoquer la fusion du liant thermoplastique. En variante, on pourrait aussi utiliser un liant thermodurcissable à la place d'un liant thermoplastique. Après refroidissement (liant thermoplastique) ou durcissement (liant thermodurcissable), les bandes sont solidement fixées à l'enveloppe interne et jouent le rôle de tirants évitant que, sous l'effet de la pression interne à laquelle est soumis le réservoir, les faces opposées du réservoir ne se déforment en s'écartant l'une de l'autre.

Selon un mode de réalisation préféré, on applique une même bande à deux éléments tubulaires adjacents et aux portions de faces opposées qui se trouvent entre ces deux éléments tubulaires, réalisant ainsi une sorte de ceinturage local. Dans le cas d'un élément tubulaire extrême, la bande est appliquée sur la face extrême la plus proche de cet élément tubulaire extrême et sur des portions de faces opposées se trouvant entre cette face extrême et ledit élément tubulaire extrême.

En variante, au lieu de fixer les bandes par le moyen d'un liant thermoplastique, on pourrait utiliser une colle à cette fin. Après mise en place des bandes de renfort, les éléments tubulaires sont, de préférence, remplis par exemple avec un matériau polymère expansé, tel que, par exemple, une mousse de polyuréthanne, de polyéthylène ou de polyépoxyde. Un tel remplissage a pour avantage de garantir la cohésion des fibres constituant la bande tissée et assure le maintien de cette dernière sur la paroi de l'élément tubulaire malgré les vibrations et autres sollicitations mécaniques susceptibles d'être appliquées au réservoir. Enfin, l'emploi de polymère expansé ne dégrade pas la résistance aux chocs du réservoir.

L'enveloppe externe est réalisée en un matériau composite, c'est-à-dire en une matrice polymère thermodurcie renforcée par des fibres renforçantes, tissées ou non, telles que des fibres de verre, de carbone ou d'aramide. Le polymère thermodurci peut dériver d'une composition thermodurcissable par exemple à base de résine époxy, polyester ou polyuréthanne. Ces compositions sont bien connues et disponibles dans le commerce.

De préférence, l'enveloppe externe est renforcée, au moins en partie, par des renforts tissés tridimensionnels à base de fibres longues. L'emploi de renforts tridimensionnels permet un drapage aisé sur l'enveloppe interne qui peut avoir une forme complexe, tout en offrant l'avantage de conférer des caractéristiques mécaniques supérieures et d'offrir une reproductibilité de l'opération de drapage, puisque le renfort est élaboré en fonction de la forme finale de la pièce à draper.

Après mise en place des renforts fibreux sur l'enveloppe interne, on place le tout dans un moule, on réalise une injection de composition résineuse thermodurcissable pour imprégner les renforts et on chauffe le tout pour thermodurcir la résine, par exemple par la technique dite SRIM/RTM ("Structural Reaction Injection Moulding/Resin Transfer Moulding" en anglais). L'enveloppe interne joue le rôle d'un noyau dans cette opération.

L'invention permet de fabriquer des réservoirs présentant un rapport masse/volume total inférieur à 0,40 kg/litre.

Il est à noter qu'il n'est pas nécessaire que l'enveloppe externe soit solidement liée à l'enveloppe interne car la pression interne à laquelle sera soumise, en service, l'enveloppe interne tend naturellement à la plaquer contre l'enveloppe externe.

La description qui va suivre faite en se référant aux dessins annexés fera bien comprendre l'invention.

La figure 1 est une vue en perspective, avec coupe partielle, de l'enveloppe interne d'un réservoir selon l'invention ; et

Les figures 2A et 2B illustrent la mise en place des renforts fibreux sur l'enveloppe interne, avant l'opération d'injection de composition résineuse thermodurcissable.

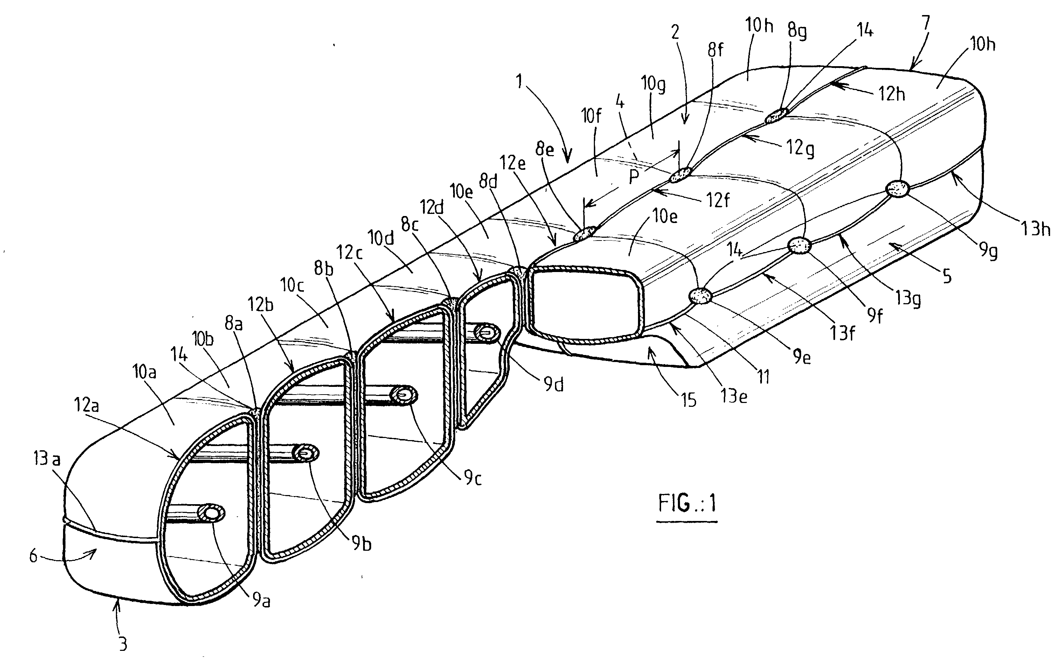

Sur la figure 1 on a représenté l'enveloppe interne d'un réservoir conforme à l'invention. Cette enveloppe 1, de forme pseudo-parallélépipédique, comprend une face supérieure 2, une face inférieure 3, deux faces latérales 4 et 5, et deux faces extrêmes 6 et 7. Elle comporte une pluralité d'éléments tubulaires 8 et 9 d'un seul tenant avec le reste de l'enveloppe interne et régulièrement espacés, par exemple d'un pas P. Les éléments 8, tels que 8a à 8g relient les faces supérieure 2 et inférieure 3, tandis que les éléments 9, tels que 9a-9g relient les faces latérales 4 et 5. Les éléments 9 sont décalés d'un demi-pas P par rapport aux éléments 8 de façon à ne pas intersecter ces derniers.

Les embouchures des éléments tubulaires 8 et 9 constituent des zones en dépression par rapport aux zones de l'enveloppe interne environnantes.

Les faces supérieure 2 et inférieure 3 se subdivisent en facettes 10, telles que 10a, 10b, ..... qui sont légèrement bombées, chaque facette étant délimitée par les bords de ces faces et les embouchures des éléments tubulaires 8.

La forme bombée de chaque facette 10 permet aux faces 2 et 3 de mieux résister, en service, à la pression interne du carburant liquéfié.

L'enveloppe interne peut être réalisée par rotomoulage en plaçant le polymère thermoplastique sous forme de poudre micronisée dans un moule approprié contenant le ou les inserts métalliques nécessaires (non représentés) et chauffé à une température provoquant la fusion du polymère thermoplastique. Ces inserts seront ultérieurement percés, filetés, etc... pour recevoir les manchons de fixation des conduits d'écoulement du carburant, des pattes de fixation ou tout autre dispositif annexe. Des mouvements de rotation et de translation du moule assurent la répartition du matériau polymère sur les parois de ce dernier.

L'enveloppe interne comporte également une pluralité d'étroites bandes 11 de renfort formant tirants entre les faces 2 et 3 d'une part, et 4 et 5, d'autre part. Les bandes 11 peuvent être constituées d'un tissu de fibres (par exemple en verre, carbone ou aramide) unidirectionnelles pré-imprégné d'un liant thermoplastique. Chaque bande 11 constitue une sorte de ceinture telle que 12a, 12b ..... ou 13a, 13b ..... passant à travers deux éléments tubulaires adjacents, tels que 8a et 8b pour la ceinture 12b, et sur les zones des faces 2 et 3 situées entre les embouchures de ces éléments tubulaires. Des ceintures, telles que 12a, sont également prévues entre les éléments tubulaires extrêmes, tels que 8a, et les faces extrêmes, telles que 6, de l'enveloppe. De préférence, chaque ceinture est double, c'est-à-dire que la bande fait un double tour. La bande formant chaque ceinture est appliquée sous une légère pression et en chauffant pour ramollir le liant de façon que la bande adhère bien, après refroidissement, à la paroi de l'enveloppe interne. Les ceintures 12 et 13 sont extrêmement résistantes à la traction et limitent fortement les possibilités de déformation sous l'effet de la pression interne du carburant liquéfié.

Après mise en place des bandes 11, on remplit avantageusement l'espace libre des éléments tubulaires de mousse polymère 14. La mousse peut être de nature thermoplastique (mousse de polyéthylène par exemple) ou thermodurcissable (mousse époxyde ou polyuréthanne par exemple); la mousse assure la cohésion et le maintien des bandes.

Enfin, l'enveloppe interne comporte à sa partie inférieure, un renfoncement ou gorge 15 transversal prévu pour permettre le passage, par exemple, du tuyau d'échappement du véhicule sur lequel sera monté le réservoir.

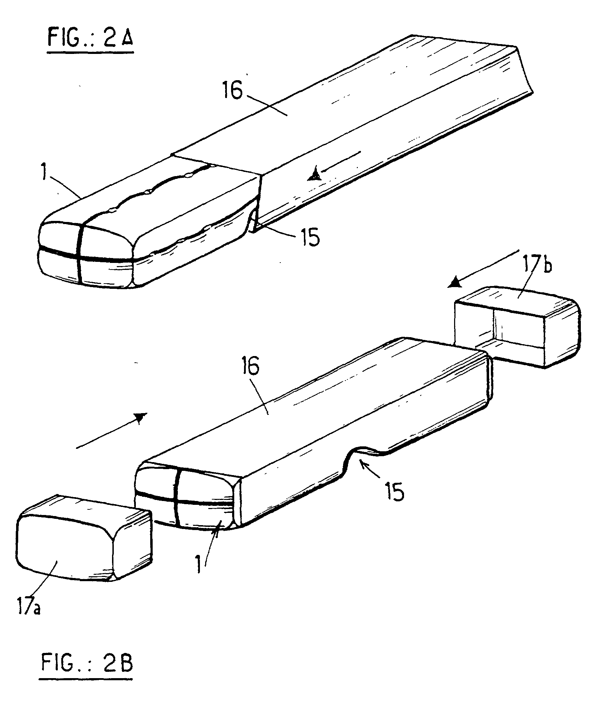

Les figures 2A et 2B illustrent l'opération de drapage, c'est-à-dire la mise en place des renforts fibreux sur l'enveloppe interne, avant l'opération d'injection.

Les renforts fibreux peuvent être constitués, comme représenté, de trois parties, à savoir une partie intermédiaire 16 et deux parties extrêmes 17a et 17b.

La partie intermédiaire 16 constitue une sorte de manchon, de forme adaptée à celle de l'enveloppe interne que l'on enfile par glissement autour de cette dernière, comme le montre la figure 2A. Une fois le manchon complètement enfilé, on le fait épouser la forme de la gorge 15 en le collant à la surface de cette dernière, par exemple par le moyen d'un adhésif appliqué sur la gorge avant l'enfilage du manchon. En variante, on pourrait mettre en place autour du manchon, au niveau de la gorge 15, une ceinture appliquant le manchon contre le fond de la gorge.

Une fois mis en place, le manchon 16 présente une longueur légèrement inférieure à celle de l'enveloppe interne.

Ce manchon est constitué d'un empilement de tissus unidirectionnels dont les fibres sont orientées suivant les directions de 0° et 90° par rapport à l'axe principal du réservoir. L'empilement comporte, dans le cas d'un tissu de masse surfacique de 500 g/m², 4 plis orientés à 0° et 4 plis orientés à 90°. Deux plis multi-directionnels de 1000 g/m² sont placés sur les plis de tissu unidirectionnel afin d'assurer la cohésion de l'empilement.

Le manchon 16 est un peu plus long à sa partie inférieure qu'à sa partie supérieure pour tenir compte du fait que, pour pouvoir épouser la forme de la gorge 15, la partie inférieure du manchon a besoin d'un supplément de longueur, par rapport à la partie supérieure.

Les parties extrêmes 17a et 17b constituent des sortes de couvercles dont la forme et la taille permettent de les emboîter sur les extrémités de la partie intermédiaire 16, en venant simultanément coiffer les faces extrêmes 6 et 7 de l'enveloppe interne. Il est bon de prévoir une zone de recouvrement de plusieurs centimètres entre chaque partie extrême et la partie intermédiaire pour éviter la création d'une faiblesse dans les zones de jonction.

Les couvercles 17a et 17b sont des structures tridimensionnelles composées d'un empilement de tissus semblable à celui décrit pour le manchon 16. Ceci permet une reproductibilité de l'opération de drapage, puisque les couvercles sont élaborés à la forme finale de la pièce à draper. En outre, de tels couvercles pourraient permettre un drapage aisé de formes complexes (dômes, tubes, etc...) dans le cas où on désirerait produire un réservoir de forme complexe.

Les fibres des renforts fibreux sont des fibres de verre, mais on pourrait leur substituer des fibres de carbone ou d'aramide.

L'enveloppe interne revêtue des renforts fibreux 16, 17a et 17b est alors soumise, dans un moule, à une opération d'injection de résine thermodurcissable, par exemple par la technique SRIM/RTM précitée. La résine thermodurcissable doit posséder une bonne tenue thermique et être auto-extinguible. On a utilisé une résine époxyde, mais des résines phénoliques ou polyuréthannes pourraient, en variante, être utilisées aussi. Afin d'éviter tout écrasement ou ramollissement de l'enveloppe interne pendant l'opération d'injection, on peut remplir l'enveloppe interne avec de l'eau, si désiré.

Après réticulation de la résine thermodurcissable, l'enveloppe composite externe présentait une épaisseur de 4,8 mm et contenait 50% en volume de renforts tissés. Le réservoir obtenu présentait un rapport masse/volume total de 0,38 kg/litre environ et supportait une pression statique d'au moins 7,0 MPa.

Les bandes de renfort limitaient très efficacement la déformation verticale maximale à moins de 5 mm lors de la mise sous pression du réservoir.

Il va de soi que les modes de réalisation décrits ne sont que des exemples et qu'on pourrait les modifier tout en restant dans le cadre de l'invention qui est uniquement défini par les revendications ci-jointes.

## Revendications

1. Réservoir en matériau composite tenant la pression, **caractérisé en ce qu'**il comprend :
A) une enveloppe interne (1) en matériau polymère thermoplastique comportant des paires de faces opposées, les faces opposées d'au moins deux de ces paires étant reliées par une pluralité d'éléments tubulaires (8, 9) dont les extrémités sont d'un seul tenant avec lesdites faces, ladite enveloppe comprenant en outre des bandes de renfort (11) traversant les éléments tubulaires et liées aux faces de l'enveloppe interne adjacentes auxdits éléments tubulaires ; et
B) une enveloppe externe en matériau composite, constituée d'une matrice thermodurcie et d'un renforcement fibreux (16, 17), recouvrant l'enveloppe interne (1).

2. Réservoir selon la revendication 1, **caractérisé en ce qu'**il présente une forme pseudo-parallélépipédique.

3. Réservoir selon la revendication 1 ou 2, **caractérisé en ce que** les faces opposées de l'enveloppe interne (1) comportent des zones bombées (10).

4. Réservoir selon l'une quelconque des revendications 1 à 3, **caractérisé en ce que** les bandes de renfort (11) sont des bandes de tissu unidirectionnel de fibres de renforcement.

5. Réservoir selon la revendication 4, **caractérisé en ce que** les bandes (11) sont liées à la surface de l'enveloppe interne (1).

6. Réservoir selon l'une quelconque des revendications 1 à 5, **caractérisé en ce que** les éléments tubulaires (8,9) sont remplis d'un matériau polymère expansé (14).

7. Réservoir selon l'une quelconque des revendications 1 à 6, **caractérisé en ce que** l'enveloppe interne (1) comporte un renfoncement ou gorge (15).

8. Réservoir selon l'une quelconque des revendications 1 à 7, **caractérisé en ce que** le renforcement fibreux (16,17) du matériau composite constituant l'enveloppe externe comprend une portion intermédiaire (16) constituée d'une pièce tubulaire formant manchon et des portions extrêmes tridimensionnelles (17a, 17b) présentant la forme des extrémités de l'enveloppe interne (1).

9. Réservoir selon la revendication 7 et 8, **caractérisé en ce que** la portion intermédiaire (16) du renfoncement fibreux (16,17) épouse sensiblement la forme dudit renfoncement ou gorge (15).

## Patentansprüche

1. Kraftstofftank aus Verbundmaterial, welcher den Druck aufrechterhält, **dadurch gekennzeichnet, dass** er aufweist:
A) eine innere Hülle (1) aus einem thermoplastischen Polymermaterial, aufweisend zwei Paare von gegenüberliegenden Wänden, wobei die gegenüberliegenden Wände von mindestens zwei dieser Paare durch eine Mehrzahl von röhrenförmigen Elementen (8, 9) verbunden sind, deren Enden aus einem Stück mit den Wänden sind, wobei die Hülle des weiteren Verstärkungsbänder (11) aufweist, welche die röhrenförmigen Elemente durchqueren, und welche mit den Wänden der inneren Hülle, die benachbart zu den röhrenförmigen Elementen sind, verbunden sind; und
B) eine äußere Hülle aus Verbundmaterial, welche aus einer thermogehärteten Matrize und einer faserartigen Verstärkung (16, 17), welche die innere Hülle (1) bedeckt, gebildet ist.

2. Kraftstofftank nach Anspruch 1, **dadurch gekennzeichnet, dass** er eine pseudo-parallelepipedische Form aufweist.

3. Kraftstofftank nach Anspruch 1 oder 2, **dadurch gekennzeichnet, dass** die gegenüberliegenden Wände der inneren Hülle (1) gewölbte Bereiche (10) aufweisen.

4. Kraftstofftank nach einem der Ansprüche 1 bis 3, **dadurch gekennzeichnet, dass** die Verstärkungsbänder (11) Bänder aus einem Gewebe mit Verstärkungsfasern, die in einer Richtung laufen, sind.

5. Kraftstofftank nach Anspruch 4, **dadurch gekennzeichnet, dass** die Bänder (11) mit der Oberfläche der inneren Hülle (1) verbunden sind.

6. Kraftstofftank nach einem der Ansprüche 1 bis 5, **dadurch gekennzeichnet, dass** die röhrenförmigen Elemente (8, 9) mit einem expandierten Polymermaterial (14) ausgefüllt sind.

7. Kraftstofftank nach irgendeinem der Ansprüche 1 bis 6, **dadurch gekennzeichnet, dass** die innere Hülle (1) einen Einzug oder Hals (15) aufweist.

8. Kraftstofftank nach irgendeinem der Ansprüche 1 bis 7, **dadurch gekennzeichnet, dass** die faserartige Verstärkung (16, 17) des Verbundmaterials, welche die äußere Hülle bildet, einen Zwischenabschnitt (16) aufweist, der aus einem röhrenförmigen Teil gebildet ist, der eine Muffe bildet, und äußerste dreidimensionale Abschnitte (17a, 17b), welche die Form der Enden der inneren Hülle (1) aufweisen.

9. Kraftstofftank nach Anspruch 7 und 8, **dadurch gekennzeichnet, dass** der Zwischenabschnitt (16) aus faserartiger Verstärkung (16, 17) sich im Wesentlichen an die Form des Einzugs oder Halses (15) anschmiegt.

## Claims

1. A tank of composite material withstanding pressure, **characterised in that** it comprises:
a) an inner jacket (1) of thermoplastic polymer material comprising pairs of opposing surfaces, the opposing surfaces of at least one of these pairs being connected by a plurality of tubular members (8, 9) whose ends are in one piece with these surfaces, the jacket further comprising reinforcing strips (11) traversing the tubular members and connected to the surfaces of the inner jacket adjacent to the tubular members,
b) an outer jacket of composite material formed by a thermoset matrix and a fibrous reinforcement (16, 17) covering the inner jacket (1).

2. A tank as claimed in claim 1, **characterised in that** it has a pseudo-parallelepipedic shape.

3. A tank as claimed in claim 1 or 2, **characterised in that** the opposing surfaces of the inner jacket (1) comprise dished zones (10).

4. A tank as claimed in any one of claims 1 to 3, **characterised in that** the reinforcing strips (11) are strips of a unidirectional fabric of reinforcing fibres.

5. A tank as claimed in claim 4, **characterised in that** the strips (11) are connected to the surface of the inner jacket (1).

6. A tank as claimed in any one of claims 1 to 5, **characterised in that** the tubular members (8, 9) are filled with an expanded polymer material (14).

7. A tank as claimed in any one of claims 1 to 6, **characterised in that** the inner jacket (1) comprises a recess or throat (15).

8. A tank as claimed in any one of claims 1 to 7, **characterised in that** the fibrous reinforcement (16, 17) of the composite material forming the outer jacket comprises an intermediate portion (16) formed by a tubular member forming a sleeve and three-dimensional end portions (17a, 17b) having the shape of the ends of the inner jacket (1).

9. A tank as claimed in claim 7 and 8, **characterised in that** the intermediate portion (16) of the fibrous reinforcement (16, 17) substantially matches the shape of the recess or throat (15).
